# EUROPÄISCHE PATENTSCHRIFT

(11) **EP 3 431 367 B1**
(45) Veröffentlichungstag und Bekanntmachung des Hinweises auf die Patenterteilung: **20.05.2020**
(21) Anmeldenummer: 18178156.8
(22) Anmeldetag: 18.06.2018
(51) Int. Cl.: B62D 15/02

(54) **VERFAHREN ZUM ZUMINDEST SEMI-AUTONOMEN AUSPARKEN EINES KRAFTFAHRZEUGS AUS EINER PARKLÜCKE, PARKASSISTENZSYSTEM SOWIE KRAFTFAHRZEUG**
MOTOR VEHICLE, PARKING ASSISTANCE SYSTEM AND METHOD FOR AT LEAST SEMI-AUTONOMOUSLY REMOVING A MOTOR VEHICLE FROM A PARKING SPACE
PROCÉDÉ DESTINÉ AU MOINS AU STATIONNEMENT SEMI-AUTOMATIQUE D'UN VÉHICULE AUTOMOBILE DANS UNE PLACE DE STATIONNEMENT, SYSTÈME D'AIDE AU STATIONNEMENT AINSI QUE VÉHICULE AUTOMOBILE

(30) Priorität: 20.06.2017 DE 102017113464
(43) Veröffentlichungstag der Anmeldung: 23.01.2019
(73) Patentinhaber: Valeo Schalter und Sensoren GmbH, 74321 Bietigheim-Bissingen (DE)
(72) Erfinder: Ayyappan, Thirumalai Kumarasamy, 74321 Bietigheim-Bissingen (DE)
(74) Vertreter: Pothmann, Karsten

(56) Entgegenhaltungen:
- EP-A1- 2 327 574
- DE-A1-102011 101 163
- DE-A1-102013 220 931

## Beschreibung

Die Erfindung betrifft ein Verfahren zum zumindest semi-autonomen Ausparken eines Kraftfahrzeugs aus einer Parklücke. Die Erfindung betrifft außerdem ein Parkassistenzsystem sowie ein Kraftfahrzeug.

Es ist bereits aus dem Stand der Technik bekannt, Parkassistenzsystem für Kraftfahrzeuge bereitzustellen, welche das Kraftfahrzeug zumindest semi-autonom manövrieren können, um sie beispielsweise in eine Parklücke einzuparken und aus der Parklücke wieder auszuparken. Beim semi-autonomen Manövrieren übernimmt das Parkassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen beziehungsweise vollautonomen Manövrieren betätigt das Parkassistenzsystem zusätzlich zu der Lenkung auch das Gaspedal und die Bremse, sodass das Kraftfahrzeug automatisch gelenkt, beschleunigt und abgebremst wird.

Dabei ist es auch bekannt, den Fahrer beim Einparken in eine Parklücke zu unterstützen, welche einen ersten Parklückenbereich und einen gegenüber dem ersten Parklückenbereich erhöhten zweiten Parklückenbereich aufweist. Der zweite Parklückenbereich bildet somit eine Erhöhung in der Parklücke aus. Der erste Parklückenbereich kann beispielsweise auf einem Niveau einer Fahrbahn des Kraftfahrzeugs liegen, wobei ein Übergang zwischen dem ersten Parklückenbereich und dem zweiten Parklückenbereich, also eine Begrenzung der Erhöhung in der Parklücke, beispielsweise durch eine Bordsteinkante bzw. eine Randsteinkante ausgebildet sein kann. Der Übergang kann beispielsweise derart in der Parklücke gelegen sein, dass er während des Einparkens von zumindest einem Rad des Kraftfahrzeugs überwunden wird, wobei das Kraftfahrzeug in einer Parkstellung nach Beendigung des Parkens mit dem zumindest einen Rad auf der Erhöhung positioniert bzw. geparkt ist. Das Kraftfahrzeug weist also in der Parkstellung innerhalb der Parklücke eine Schräglage auf.

Üblicherweise werden beim Ausschalten des Motors nach Durchführung des Einparkvorgangs, also nach Abstellen des Kraftfahrzeugs in der Parkstellung, alle Daten, welche die Erhöhung sowie eine Position der Begrenzung der Erhöhung innerhalb der Parklücke betreffen, gelöscht. Das Parkassistenzsystem kann sich also nicht mehr "erinnern", dass das Kraftfahrzeug die Schräglage aufweist. Wird der Motor des Kraftfahrzeugs nun zum Ausparken des Kraftfahrzeugs aus der Parklücke wieder gestartet, so kann es sein, dass das Kraftfahrzeug, insbesondere Stoßdämpfer des Kraftfahrzeugs, beim Ausparken beschädigt werden, da dem Parkassistenzsystem das Vorhandensein der Erhöhung nicht mehr bekannt ist und die Erhöhung daher Ausparken nicht berücksichtigt wird.

EP 2 327 574 A1 offenbart ein Verfahren zur Unterstützung eines Fahrers eines Fahrzeugs bei einem Fahrmanöver zur Überwindung eines Hindernisses mit einer geringen Geschwindigkeit, wobei das Hindernis eine Höhe aufweist, die von dem Fahrzeug Überwunden werden kann. Das Verfahren umfasst folgende Schritte: (a) Übertragen eines hohen Drehmoments oder einer Kraft an die Raeder zur Überwindung des Hindernisses, (b) Erfassen, ob das Hindernis Überwunden worden ist, (c) Reduzieren des Drehmoments oder der an die Raeder Übertragenen Kraft oder automatisches Abbremsen des Fahrzeugs unmittelbar nach Überwindung des Hindernisses.

DE 10 2013 220931 A1 betrifft ein Verfahren und eine Vorrichtung zum Unterstützen des Auffahrens eines Kraftfahrzeuges auf einen Bordstein. Das Verfahren weist folgende Schritte auf: Erfassen eines in der Umgebung des Kraftfahrzeuges befindlichen Bordsteins, und Modifizieren wenigstens eines Betriebsparameters des Kraftfahrzeuges derart, dass während des Auffahrens wenigstens eines Reifens des Kraftfahrzeuges auf den Bordstein eine mit diesem Auffahren einhergehende Erschütterung des Kraftfahrzeuges im Vergleich zu einem analogen Auffahrvorgang ohne diese Modifikation reduziert wird.

DE 10 2011 101163 A1 offenbart ein Verfahren und eine Vorrichtung zur Positionsbestimmung eines Fahrzeuges, während eines Einparkvorgangs, wobei die Vorrichtung mindestens eine Einrichtung zur Erfassung einer Anzahl von Umdrehungen mindestens eines Rades des Fahrzeuges, mindestens eine Einrichtung zur Erfassung einer Anzahl von Umdrehungen mindestens eines Rades des Fahrzeuges, mindestens eine Einrichtung zur Bestimmung einer Richtung einer Fahrzeugbewegung und eine Auswerteeinrichtung umfasst, wobei mittels der Einrichtung zur Erfassung einer Anzahl von Umdrehungen eine Anzahl von Umdrehungen mindestens eines Rades des Fahrzeuges erfassbar ist, wobei mittels der Einrichtung zur Bestimmung einer Richtung eine Richtung der Fahrzeugbewegung bestimmbar ist, wobei mittels der Auswerteeinrichtung in Abhängigkeit der Anzahl von Umdrehungen und der Richtung der Fahrzeugbewegung eine zweidimensionale Position des Fahrzeugs in einer Fahrbahnebene bestimmbar ist, wobei die Vorrichtung eine Einrichtung zur Erfassung eines Höhenabstandes umfasst, wobei mittels der Einrichtung zur Erfassung eines Höhenabstands gleichzeitig ein Höhenabstand oder eine Änderung eines Höhenabstandes des mindestens einen Rades von der Fahrbahnebene bestimmbar ist, wobei die zweidimensionale Position des Fahrzeugs zusätzlich in Abhängigkeit des Höhenabstandes oder der Änderung des Höhenabstandes bestimmbar ist. In einer Ausführungsform kann die Vorrichtung mindestens eine Einrichtung zur Erfassung einer Fahrzeugneigung umfassen, wobei der Höhenabstand oder eine Änderung des Höhenabstandes in Abhängigkeit der Fahrzeugneigung bestimmbar ist.

Es ist Aufgabe der vorliegenden Erfindung, eine Lösung bereitzustellen, wie ein Kraftfahrzeug auf besonders zuverlässige Weise beschädigungsfrei aus einer Parklücke ausgeparkt werden kann.

Diese Aufgabe wird erfindungsgemäß durch ein Verfahren, durch ein Parkassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche.

Gemäß dem erfindungsgemäßen Verfahren zum zumindest semi-autonomen Ausparken eines Kraftfahrzeugs aus einer Parklücke wird vor Beginn des Ausparkens anhand von Sensordaten einer fahrzeugseitigen Sensoreinrichtung ein Neigungswinkel des Kraftfahrzeugs in einer Parkstellung des Kraftfahrzeugs in der Parklücke gemessen und anhand des Neigungswinkels wird eine Lage des Kraftfahrzeugs innerhalb der Parklücke erfasst. Falls anhand des Neigungswinkels als die Lage des Kraftfahrzeugs in der Parkstellung eine Schräglage des Kraftfahrzeugs erfasst wird, in welcher zumindest ein Rad des Kraftfahrzeugs auf einer Erhöhung innerhalb der Parklücke geparkt ist, wird während des Ausparkens zumindest für einen Abrollvorgang des zumindest einen Rades von der Erhöhung eine im Vergleich zu einer vorbestimmten Normalausparkgeschwindigkeit geringere Abrollgeschwindigkeit für das Kraftfahrzeug vorgegeben.

Mittels des Verfahrens kann somit ein Parkassistenzsystem realisiert werden, durch welches das Kraftfahrzeug beschädigungsfrei aus einer Parklücke ausgeparkt werden kann, auch wenn die Parklücke eine Erhöhung, beispielsweise in Form von einer Stufe, aufweist. Die Erhöhung in der Parklücke kann beispielsweise durch eine Bordsteinkante bzw. eine Randsteinkante begrenzt sein. Die Erhöhung ist insbesondere ein zweiter Parklückenbereich, welcher gegenüber einem ersten Parklückenbereich erhöht ist. Der erste Parklückenbereich befindet sich beispielsweise auf einem Niveau einer Fahrbahn des Kraftfahrzeugs.

Das Kraftfahrzeug kann durch das Parkassistenzsystem beispielsweise zumindest semi-autonom aus der Parklücke ausgeparkt werden. Dies bedeutet, dass das Kraftfahrzeug semi-autonom oder autonom aus der Parklücke ausgeparkt werden kann. Vorzugsweise wird das Kraftfahrzeug autonom bzw. vollautonom aus der Parklücke ausgeparkt. Beim autonomen Ausparken übernimmt eine Steuereinrichtung des Parkassistenzsystems eine Längsführung und eine Querführung des Kraftfahrzeugs. Die Steuereinrichtung kann das Kraftfahrzeug also automatisch beschleunigen, abbremsen und lenken. Das Kraftfahrzeug kann dabei sowohl aus einer als Querparklücke ausgebildeten Parklücke als auch aus einer als Längsparklücke ausgebildeten Parklücke ausgeparkt werden.

Bevor der Ausparkvorgang gestartet wird, also beispielsweise nach Starten eines Motors des Kraftfahrzeugs, jedoch insbesondere bevor das Kraftfahrzeug beschleunigt wird, wird die Lage des Kraftfahrzeugs in der Parkstellung, welche das Kraftfahrzeug in der Parklücke aufweist, erfasst. Dies bedeutet insbesondere, dass die Lage des Kraftfahrzeugs in der Parklücke erfasst wird, während das Kraftfahrzeug noch in der Parklücke steht, also einen statischen bzw. stationären Zustand aufweist. Zum Erfassen der Lage wird der Neigungswinkel von der Sensoreinrichtung des Parkassistenzsystems erfasst. Insbesondere wird der Neigungswinkel um eine Fahrzeuglängsachse und/oder um eine Fahrzeugquerachse erfasst. Anhand des Neigungswinkels um die Fahrzeuglängsachse, also anhand eines Rollwinkels, kann beispielsweise erfasst werden, welche Lage das Kraftfahrzeug in einer als Längsparklücke ausgebildeten Parklücke aufweist. Anhand des Neigungswinkels um die Fahrzeugquerachse, also anhand eines Nickwinkels, kann erfasst werden, welche Lage das Kraftfahrzeug in einer als Querparklücke ausgebildeten Parklücke aufweist.

Als die Lage kann dabei die Schräglage erfasst werden, in welcher das Kraftfahrzeug um die jeweilige Fahrzeugachse, also beispielsweise bezüglich der Längsachse oder bezüglich der Querachse, geneigt ist. In dieser Schräglage ist zumindest ein Rad, insbesondere zwei Räder, auf der Erhöhung positioniert. Auch kann eine Normallage des Kraftfahrzeugs in der Parkstellung erkannt werden, in welcher insbesondere kein Rad des Kraftfahrzeugs auf der Erhöhung positioniert ist. In diesem Fall ist die Parklücke insbesondere als eine ebene, erhöhungsfreie Parklücke ausgebildet. Die Fahrzeugquerachse und die Fahrzeuglängsachse sind dabei im Wesentlichen parallel zu einer Oberfläche der Parklücke ausgerichtet. Insbesondere wird die Schräglage des Kraftfahrzeugs erkannt, wenn der gemessene Neigungswinkel einen vorbestimmten Schwellwert überschreitet. Der Schwellwert kann dabei beispielsweise ein Wert des Neigungswinkels des Kraftfahrzeugs in der Normallage des Kraftfahrzeugs sein.

Wenn die Normallage des Kraftfahrzeugs in der Parkstellung erfasst wird, so wird zum Ausparken des Kraftfahrzeugs aus der, insbesondere ebenen, Parklücke die Normalausparkgeschwindigkeit vorgegeben. Die Normalausparkgeschwindigkeit ist also insbesondere eine Geschwindigkeit, welche für Ausparkvorgänge des Kraftfahrzeugs aus ebenen Parklücken vorgegeben ist, innerhalb welchen das Kraftfahrzeug in der Parkstellung die Normallage aufweist. Wenn die Schräglage des Kraftfahrzeugs in der Parkstellung erfasst wird, so wird zur Vermeidung einer Beschädigung des Kraftfahrzeugs, insbesondere eines Unterbodens und/oder eines Stoßfängers des Kraftfahrzeugs, der Ausparkvorgang entsprechend vorsichtig durchgeführt. Dies bedeutet, dass insbesondere für den Abrollvorgang des zumindest einen, auf der Erhöhung positionierten Rades die Abrollgeschwindigkeit vorgegeben wird. Die Abrollgeschwindigkeit ist dabei niedriger als die Normalausparkgeschwindigkeit. Es wird also für den Abrollvorgang des abzurollenden Rades die Geschwindigkeit des Kraftfahrzeugs reduziert, um ein schlagartiges Auftreffen des Rades auf dem ersten Parklückenbereich und damit die Beschädigung des Kraftfahrzeugs zu vermeiden. Die Abrollgeschwindigkeit ist eine gegenüber dieser Normalausparkgeschwindigkeit reduzierte Geschwindigkeit, welche für Parklücken mit Erhöhungen vorgegeben ist.

Durch das Erfassen des Neigungswinkels kann somit auf besonders einfache Weise die Lage des Kraftfahrzeugs in der Parkstellung bestimmt werden und eine Ausparkgeschwindigkeit des Kraftfahrzeugs an die Lage des Kraftfahrzeugs in der Parkstellung angepasst werden. Somit können Beschädigungen des Kraftfahrzeugs beim Ausparken vermieden werden.

Vorzugsweise wird der Neigungswinkel des Kraftfahrzeugs anhand der Sensordaten einer inertialen Messeinheit der Sensoreinrichtung des Kraftfahrzeugs erfasst. Die inertiale Messeinheit (IMU- "inertial measurement unit") ist insbesondere eine Kombination mehrerer Inertialsensoren, beispielsweise Beschleunigungssensoren zum Erfassen einer translatorischen Bewegung des Kraftfahrzeugs und Drehratensensoren zum Erfassen einer rotierenden Bewegung des Kraftfahrzeugs. Die inertiale Messeinheit kann beispielsweise jeweils drei Beschleunigungssensoren zum Erfassen der translatorischen Bewegung entlang aller drei Fahrzeugachsen sowie drei Drehratensensoren zum Erfassen der rotierenden Bewegung um alle drei Fahrzeugachsen aufweisen. Besonders bevorzugt wird der Neigungswinkel des Kraftfahrzeugs anhand von Sensordaten zumindest eines Drehratensensors der Sensoreinrichtung des Kraftfahrzeugs, insbesondere eines Gyroskops, erfasst. Insbesondere werden zur Messung des Neigungswinkels der Drehratensensor für die Erfassung der rotierenden Bewegung um die Fahrzeugquerachse und der Drehratensensor für die Erfassung der rotierenden Bewegung um die Fahrzeuglängsachse ausgelesen.

Eine solche inertiale Messeinheit und/oder solche Drehratensensoren sind üblicherweise im Kraftfahrzeug bereits vorhanden, beispielsweise für ein Navigationssystem oder ein elektronisches Stabilitätsprogramm des Kraftfahrzeugs. Diese inertiale Messeinheit und/oder die Drehratensensoren können nun in vorteilhafter Weise auch dazu verwendet werden, die durch das Kraftfahrzeug in der Parkstellung eingenommene Lage zu messen. Die Drehratensensoren können beispielsweise als Gyroskope basierend auf MEMS-Technologie (MEMS- mikroelektromechanische Systeme) ausgebildet sein und somit besonders platzsparend in dem Kraftfahrzeug angeordnet werden.

Auch kann vorgesehen sein, dass der Neigungswinkel des Kraftfahrzeugs anhand von Kompressionsdaten der Sensoreinrichtung zumindest eines Stoßdämpfers des Kraftfahrzeugs gemessen wird. Dieser Ausführungsform der Erfindung liegt Erkenntnis zugrunde, dass die Stoßdämpfer der Räder bei einer Schräglage des Kraftfahrzeugs unterschiedlich belastet und damit unterschiedlich komprimiert sind. Anhand der Stoßdämpferkompressionen der Räder können somit ebenfalls der Neigungswinkel des Kraftfahrzeugs sowie die Lage des Kraftfahrzeugs in der Parkstellung erfasst werden.

Es erweist sich als vorteilhaft, wenn anhand eines Wertes des erfassten Neigungswinkels eine Position einer Begrenzung der Erhöhung in der Parklücke bestimmt wird. Hier wird also die Position bzw. Lage der Begrenzung der Erhöhung, insbesondere eine Position des Übergangs in der Parklücke bestimmt. Die Position der Begrenzung kann beispielsweise relativ zu einer Radachse oder einer Seite des Kraftfahrzeugs bestimmt werden, beispielsweise relativ zu dem zumindest einen auf der Erhöhung abgestellten Rad des Kraftfahrzeugs. Gemäß dieser Ausführungsform der Erfindung kann das Ausparken, beispielsweise die Reduzierung der Geschwindigkeit, optimal an die Position der Begrenzung in der Parklücke angepasst werden.

Vorzugsweise wird eine Liste vorgegeben, in welcher vorbestimmten Winkelwerten für den Neigungswinkel vorbestimmte Positionswerte zugeordnet sind, wobei anhand des erfassten Wertes des Neigungswinkels aus der Liste der zugehörige Positionswert ausgelesen wird und der Positionswert als die Position der Begrenzung der Erhöhung in der Parklücke bestimmt wird. In der Liste kann beispielsweise jedem Winkelwert oder einem bestimmten Wertebereich von Winkelwerten ein Positionswert der Erhöhung zugeordnet sein. Die Liste kann beispielsweise eine Kennlinie und/oder eine Umsetzungstabelle bzw. Look-up Tabelle (LUT) sein, welche beispielsweise in einer fahrzeugseitigen Speichereinrichtung hinterlegt ist. Die Liste kann beispielsweise mittels Testmessungen vorbestimmt werden, in welchen das Kraftfahrzeug in vorbestimmten Testschräglagen und damit bekannten Testpositionen zu der Begrenzung des Übergangs positioniert wird. Dann kann der Neigungswinkel bei den jeweiligen Testlagen ausgelesen werden und gemeinsam mit den bekannten Testpositionen in der Liste hinterlegt werden. Diese Liste kann von der Steuereinrichtung nach der Messung des Neigungswinkels ausgelesen werden, um anhand des erfassten Wertes des Neigungswinkels aus der Liste die Position der Erhöhung zu bestimmen und den zumindest semi-autonomen Ausparkvorgang zu starten. Durch das Bestimmen bzw. Vorgeben einer solchen Liste kann vor Beginn des Ausparkens besonders schnell und einfach die Position der Begrenzung der Erhöhung bestimmt werden, sodass der Ausparkvorgang besonders schnell und ohne Verzögerung gestartet werden kann.

In einer vorteilhaften Weiterbildung der Erfindung wird eine einen Umgebungsbereich des Kraftfahrzeugs beschreibende Umgebungskarte erstellt, und die anhand des Wertes des Neigungswinkels erfasste Position der Begrenzung der Erhöhung wird in die Umgebungskarte eingetragen. Die Umgebungskarte beschreibt den Umgebungsbereich des Kraftfahrzeugs insbesondere objektbasiert. In der Umgebungskarte sind also insbesondere Objekte in dem Umgebungsbereich, beispielsweise Hindernisse, Parklücken sowie die Erhöhung innerhalb der Parklücke, relativ zum Kraftfahrzeug eingetragen. Die Umgebungskarte kann beispielsweise von der Steuereinrichtung ausgelesen werden, um das Kraftfahrzeug zumindest semi-autonom in dem Umgebungsbereich zu manövrieren. Dabei kann die Steuereinrichtung auch in die Umgebungskarte schreiben, um diese zu aktualisieren. Dazu kann die Steuereinrichtung beispielsweise die anhand des Wertes des Neigungswinkels erfasste Position der Begrenzung der Erhöhung in die Umgebungskarte eintragen.

In einer Ausführungsform der Erfindung wird in Abhängigkeit von der Position der Erhöhung eine Abrollposition für das zumindest eine Rad vorgegeben, wobei das Kraftfahrzeug mit der Normalausparkgeschwindigkeit bis zu der Abrollposition bewegt wird und das Kraftfahrzeug zum Durchführen des Abrollvorgangs an der Abrollposition auf die Abrollgeschwindigkeit abgebremst wird. Die Abrollposition kann beispielsweise eine Position auf der Erhöhung sein, welche beispielsweise einen vorbestimmten Abstand zu der Begrenzung aufweist. Auch kann die Abrollposition die Position der Begrenzung selbst sein. Der Ausparkvorgang wird insbesondere mit der Normalausparkgeschwindigkeit gestartet. Wenn das auf der Erhöhung positionierte, abzurollende Rad die Abrollposition erreicht hat, wird die Geschwindigkeit des Kraftfahrzeugs auf die Abrollgeschwindigkeit reduziert. Ob das abzurollende Rad die Abrollposition erreicht hat, kann beispielsweise mittels Odometriedaten des Kraftfahrzeugs bestimmt werden.

Die Erfindung betrifft außerdem ein Parkassistenzsystem zum zumindest semi-autonomen Ausparken eines Kraftfahrzeugs aus einer Parklücke. Das Parkassistenzsystem weist eine Sensoreinrichtung zum Messen eines Neigungswinkels des Kraftfahrzeugs in einer Parkstellung des Kraftfahrzeugs innerhalb der Parklücke auf. Darüber hinaus weist das Parkassistenzsystem eine Steuereinrichtung auf, welche dazu ausgelegt ist, anhand des Neigungswinkels eine Lage des Kraftfahrzeugs in der Parklücke zu erfassen. Die Steuereinrichtung ist dazu ausgelegt, falls anhand des Neigungswinkels als die Lage des Kraftfahrzeugs in der Parkstellung eine Schräglage des Kraftfahrzeugs erfasst ist, in welcher zumindest ein Rad des Kraftfahrzeugs auf einer Erhöhung innerhalb der Parklücke geparkt ist, während des Ausparkens zumindest für einen Abrollvorgang des zumindest einen Rades von der Erhöhung eine im Vergleich zu einer vorbestimmten Normalausparkgeschwindigkeit geringere Abrollgeschwindigkeit für das Kraftfahrzeug vorzugeben.

Insbesondere kann die Steuereinrichtung eine Längsführung und eine Querführung des Kraftfahrzeugs übernehmen, um das Kraftfahrzeug zumindest semi-autonom zu manövrieren.

Ein erfindungsgemäßes Kraftfahrzeug umfasst ein erfindungsgemäßes Parkassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Kraftfahrzeug.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs in einer Parkstellung innerhalb einer Parklücke;
- Fig. 2a, 2b: schematische Darstellungen des Kraftfahrzeugs in unterschiedlichen Lagen in der Parkstellung;
- Fig. 3a bis 3d: schematische Darstellungen des Kraftfahrzeugs in einer Schräglage in der Parkstellung mit unterschiedlichen Neigungswinkeln; und
- Fig. 4: eine schematische Darstellung einer Kennlinie, in welcher vorbestimmten Neigungswinkel vorbestimmte Positionen zugeordnet sind.

In den Figuren sind gleiche sowie funktionsgleiche Elemente mit den gleichen Bezugszeichen versehen.

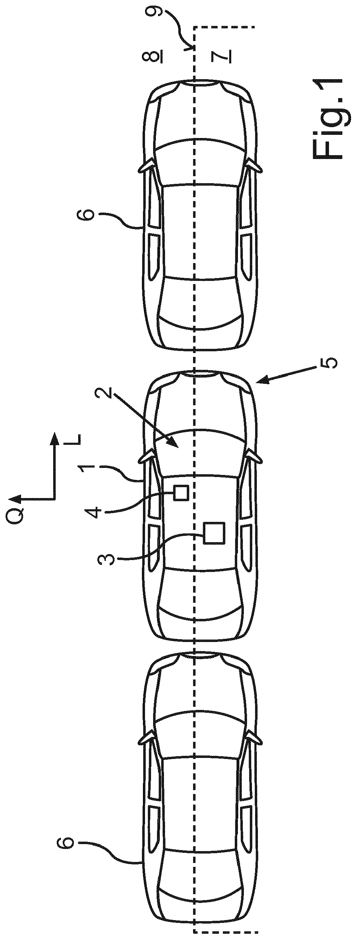

Fig. 1 zeigt ein Kraftfahrzeug 1 gemäß einer Ausführungsform der vorliegenden Erfindung. Das Kraftfahrzeug 1 ist im vorliegenden Fall als ein Personenkraftwagen ausgebildet. Das Kraftfahrzeug 1 umfasst ein Parkassistenzsystem 2, welches dazu ausgelegt ist, das Kraftfahrzeug 1 zumindest semi-autonom, insbesondere voll-autonom, zu manövrieren. Dazu kann das Parkassistenzsystem 2 eine Steuereinrichtung 3 aufweisen, welche insbesondere dazu ausgelegt ist, eine Längsführung und eine Querführung des Kraftfahrzeugs 1 zu übernehmen. Die Steuereinrichtung 3 kann beispielsweise in ein fahrzeugseitiges Steuergerät bzw. eine ECU ("Electronic Control Unit") integriert sein. Außerdem weist das Parkassistenzsystem 2 eine Sensoreinrichtung 4 auf, welche dazu ausgelegt ist, einen Neigungswinkel α des Kraftfahrzeugs 1 um eine Fahrzeuglängsachse L und/oder eine Fahrzeugquerachse Q zu erfassen.

Das Parkassistenzsystem 2 ist insbesondere dazu ausgebildet, das Kraftfahrzeug 1 zumindest semi-autonom aus einer Parklücke 5 auszuparken, in welcher das Kraftfahrzeug 1 in einer Parkstellung abgestellt ist. Die Parklücke 5 des Kraftfahrzeugs 1 ist hier durch zwei andere Fahrzeuge 6 begrenzt. Außerdem weist die Parklücke 5 einen Übergang 7 auf, welcher gegenüber einem Parklückenbereich 8 erhöht ist. Der Parklückenbereich 8 befindet sich beispielsweise auf einem Niveau einer Fahrbahn des Kraftfahrzeugs 1. Eine Begrenzung 9 der Erhöhung 7 kann beispielsweise durch eine Bordsteinkante bzw. Randsteinkante ausgebildet sein. Um nun zu verhindern, dass das Kraftfahrzeug 1 beim zumindest semi-autonomen Ausparken aus der Parklücke 5 durch die Begrenzung 9 der Erhöhung 7 beschädigt wird, wird anhand des von der Sensoreinrichtung 4 gemessenen Neigungswinkels α eine Lage S1, S2 des Kraftfahrzeugs 1 in der Parkstellung innerhalb der Parklücke 5 erfasst.

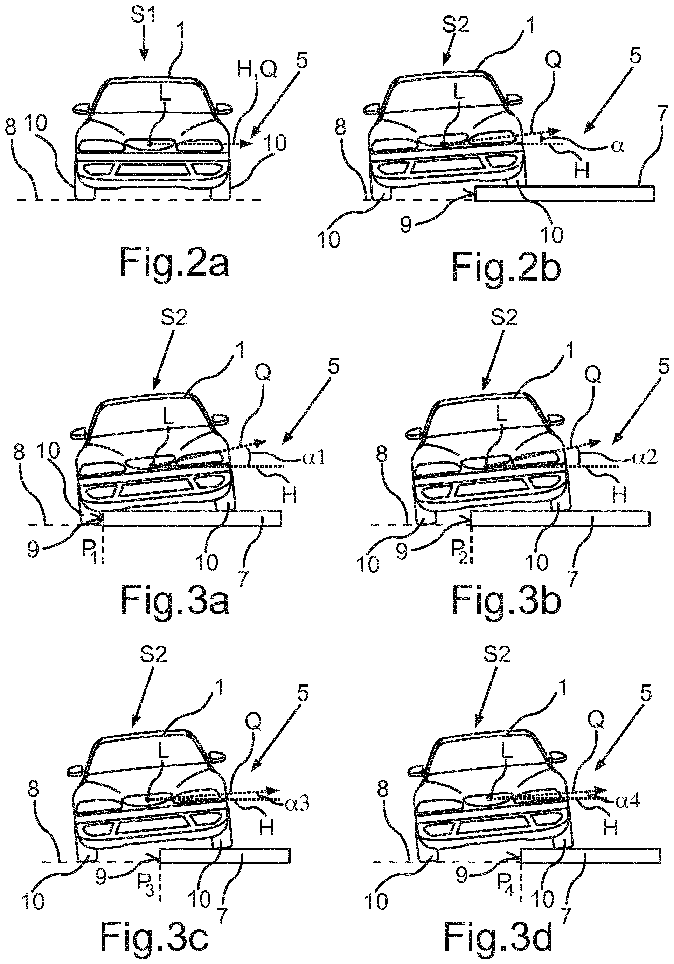

Gemäß Fig. 2a weist das Kraftfahrzeug 1 eine Normallage S1 auf. Gemäß Fig. 2b weist das Kraftfahrzeug 1 eine Schräglage S2 auf. In der Normallage S1 ist das Kraftfahrzeug 1 in einer ebenen Parklücke 5 geparkt, welche keine Erhöhung 7 aufweist. Alle Räder 10 des Kraftfahrzeugs 1 befinden sich auf dem ebenen Parklückenbereich 8. In der Schräglage S2 parkt das Kraftfahrzeug 1 mit zumindest einem Rad 10, hier dem linken Vorderrad und dem linken Hinterrad, auf der Erhöhung 7. Diese Schräglage S2 kann anhand des Neigungswinkels α zwischen einer Horizontalachse H und der Fahrzeugquerachse Q erkannt werden. Die Horizontalachse H ist insbesondere parallel zu der Oberfläche der Parklücke 5 bzw. des Parklückenbereiches 8 orientiert. Der Winkel α ist hier der Neigungswinkel des Kraftfahrzeugs 1 um die Fahrzeuglängsachse L und wird auch als Rollwinkel bezeichnet. Die Schräglage S2 wird beispielsweise erkannt, wenn der Neigungswinkel α einen vorbestimmten Schwellwert unterschreitet. Der vorbestimmte Schwellwert kann beispielsweise der Neigungswinkel α des Kraftfahrzeugs 1 in der Normallage S1 sein. Hier ist die Fahrzeugquerachse Q entlang der Horizontalachse H orientiert. Der Neigungswinkel α des Kraftfahrzeugs 1 in der Normallage S1 und damit der Schwellwert betragen somit 0°.

Wenn die Schräglage S2 des Kraftfahrzeugs 1 erkannt wurde, so kann eine Geschwindigkeit des Kraftfahrzeugs 1 während des Ausparkens reduziert werden. Beispielsweise kann der Ausparkvorgang mit einer Normalausparkgeschwindigkeit gestartet werden und auf eine Abrollgeschwindigkeit reduziert werden, um die auf der Erhöhung 7 positionierten Räder 10, also hier die Räder 10 der linken Seite des Kraftfahrzeugs 1, von der Erhöhung 7 abzurollen.

Außerdem kann, wie anhand von Fig. 3a, 3b, 3c, 3d gezeigt, eine Position P1, P2, P3, P4 der Begrenzung 9 der Erhöhung 7 in der Parklücke 5 bestimmt werden. Dazu kann von der Sensoreinrichtung 4 des Kraftfahrzeugs 1 ein Wert α1, α2, α3, α4 des Neigungswinkels α des Kraftfahrzeugs 1 in der Schräglage S2 gemessen bzw. erfasst werden. Zum Erfassen des Wertes α1, α2, α3, α4 des Neigungswinkels α kann die Sensoreinrichtung 4 eine inertiale Messeinheit und/oder zumindest einen Drehratensensor, insbesondere zumindest ein mikromechanisches Gyroskop, aufweisen. Bei einem ersten Wert α1 des Neigungswinkels α weist die Begrenzung 9 der Erhöhung 7, wie in Fig. 3a gezeigt, beispielsweise eine erste Position P1 in der Parklücke 5 auf. Bei einem zweiten Wert α2 des Neigungswinkels α weist die Begrenzung 9 der Erhöhung 7, wie in Fig. 3b gezeigt, beispielsweise eine zweite Position P2 in der Parklücke 5 auf. Bei einem dritten Wert α3 des Neigungswinkels α weist die Begrenzung 9 der Erhöhung 7, wie in Fig. 3c gezeigt, beispielsweise eine dritte Position P3 in der Parklücke 5 auf und bei einem vierten Wert α4 des Neigungswinkels α weist die Begrenzung 9 der Erhöhung 7, wie in Fig. 3d gezeigt, beispielsweise eine vierte Position P4 in der Parklücke 5 auf. Die Positionen P1, P2, P3, P4 können beispielsweise relativ zu dem auf der Erhöhung 7 abgestellten Rad 10, also hier den Rädern 10 der linken Seite des Kraftfahrzeugs 1, angegeben werden. Je größer dabei der Wert α1, α2, α3, α4 des Neigungswinkels α ist, desto weiter entfernt befindet sich die Position P1, P2, P3, P4 der Begrenzung 9 der Erhöhung 7 zu den auf der Erhöhung 7 abgestellten Rädern 10. Ein Abstand zwischen den auf der Erhöhung 7 abgestellten Rädern 10 und der Begrenzung 9 der Erhöhung 7 steigt also mit sinkendem Neigungswinkel α.

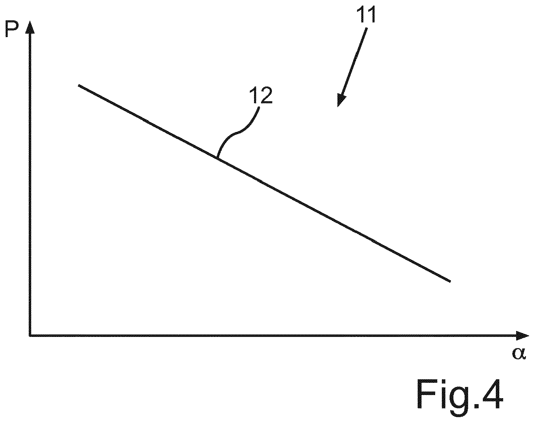

Um die Positionen P 1, P2, P3, P4 möglichst schnell ermitteln zu können, kann, wie in Fig. 4 gezeigt, eine Liste 11 vorgegeben werden, in welcher vorbestimmten Winkelwerten des Neigungswinkels α (Abszisse) vorbestimmte Positionswerte P (Ordinate) zugeordnet sind. Die Liste 11 ist hier in Form von einer linearen Kennlinie 12 vorgegeben. Die Liste 11 kann aber auch als eine Umsetzungstabelle bzw. Look-up Tabelle (LUT) angegeben sein. In Abhängigkeit von dem erfassten Wert α1, α2, α3, α4 des Neigungswinkels α kann dann der zugehörige Positionswert P aus der Liste 11 ausgelesen werden. Dieser Positionswert P aus der Liste 11 kann dann als die Position P1, P2, P3, P4 der Begrenzung 9 der Erhöhung 7 bestimmt werden. Die Position P1, P2, P3, P4 der Begrenzung 9 kann beispielsweise in eine Umgebungskarte eingetragen werden, welche einen Umgebungsbereich des Kraftfahrzeugs 1 insbesondere objektbasiert beschreibt. In die Umgebungskarte können beispielsweise die Parklücke 5, die anderen Fahrzeuge 6 sowie die Begrenzung 9 der Erhöhung 7 sowie deren Positionen relativ zum Kraftfahrzeug 1 eingetragen werden. Die Liste 11 sowie die Umgebungskarte können beispielsweise in einer fahrzeugseitigen Speichereinrichtung hinterlegt werden, wobei die Liste 11 und die Umgebungskarte von der Steuereinrichtung 3 des Parkassistenzsystems 2 ausgelesen werden können. Die Steuereinrichtung 3 kann außerdem die Umgebungskarte aktualisieren, beispielsweise hinsichtlich der erfassten Position P1, P2, P3, P4 der Begrenzung 9 der Erhöhung 7 in der Parklücke 5.

Dabei kann vorgesehen sein, dass der Ausparkvorgang des Kraftfahrzeugs 1 aus der Parklücke 9 mit der Normalausparkgeschwindigkeit begonnen wird und das Kraftfahrzeug 1 erst abgebremst wird, sobald das auf der Erhöhung 7 positionierte Rad 10 eine vorbestimmte Abrollposition bezüglich der Position P1, P2, P3, P4 der Begrenzung 9 der Erhöhung 7 aufweist. An dieser Abrollposition wird dann das Kraftfahrzeug 1 abgebremst, sodass das auf der Erhöhung 7 positionierte Rad 10 langsam auf den Parklückenbereich 8 abrollt und somit ein Unterboden des Kraftfahrzeugs 1 sowie Stoßfänger des Kraftfahrzeugs 1 beim Ausparken aus der Parklücke 5 nicht beschädigt werden. Ob die abzurollenden, auf der Erhöhung 7 positionierten Räder 10 die Abrollposition erreicht haben, kann beispielsweise anhand von Odometriedaten des Kraftfahrzeugs 1 erfasst werden.

## Patentansprüche

1. Verfahren zum zumindest semi-autonomen Ausparken eines Kraftfahrzeugs (1) aus einer Parklücke (5), bei welchem vor Beginn des Ausparkens anhand von Sensordaten einer fahrzeugseitigen Sensoreinrichtung (4) ein Neigungswinkel (α) des Kraftfahrzeugs (1) in einer Parkstellung des Kraftfahrzeugs (1) innerhalb der Parklücke (5) gemessen wird und anhand des Neigungswinkels (α) eine Lage (S1, S2) des Kraftfahrzeugs (1) in der Parklücke (5) erfasst wird, wobei, falls anhand des Neigungswinkels (α) als die Lage (S1, S2) des Kraftfahrzeugs (1) in der Parkstellung eine Schräglage (S2) des Kraftfahrzeugs (1) erfasst wird, in welcher zumindest ein Rad (10) des Kraftfahrzeugs (1) auf einer Erhöhung (7) innerhalb der Parklücke (5) geparkt ist, während des Ausparkens zumindest für einen Abrollvorgang des zumindest einen Rades (10) von der Erhöhung (7) eine im Vergleich zu einer vorbestimmten Normalausparkgeschwindigkeit geringere Abrollgeschwindigkeit für das Kraftfahrzeug (1) vorgegeben wird.

2. Verfahren nach Anspruch 1,
**dadurch gekennzeichnet, dass**
die Schräglage (S2) des Kraftfahrzeugs (1) erkannt wird, wenn der gemessene Neigungswinkel (α) einen vorbestimmten Schwellwert überschreitet.

3. Verfahren nach Anspruch 1 oder 2,
**dadurch gekennzeichnet, dass**
der Neigungswinkel (α) des Kraftfahrzeugs (1) anhand der Sensordaten einer inertialen Messeinheit der Sensoreinrichtung (4) des Kraftfahrzeugs (1) erfasst wird.

4. Verfahren nach einem der vorhergehenden Ansprüche,
**dadurch gekennzeichnet, dass**
der Neigungswinkel (α) des Kraftfahrzeugs (1) anhand der Sensordaten zumindest eines Drehratensensors der Sensoreinrichtung (4) des Kraftfahrzeugs (1), insbesondere eines Gyroskops, erfasst wird.

5. Verfahren nach einem der vorhergehenden Ansprüche,
**dadurch gekennzeichnet, dass**
der Neigungswinkel (α) des Kraftfahrzeugs (1) anhand der Kompressionsdaten einer Sensorreinrichtung (4) zumindest eines Stoßdämpfers des Kraftfahrzeugs (1) gemessen wird.

6. Verfahren nach einem der vorhergehenden Ansprüche,
**dadurch gekennzeichnet, dass**
anhand eines Wertes (α1, α2, α3, α4) des erfassten Neigungswinkels (α) eine Position (P1, P2, P3, P4) einer Begrenzung (9) der Erhöhung (7) in der Parklücke (5) bestimmt wird.

7. Verfahren nach Anspruch 6,
**dadurch gekennzeichnet, dass**
eine Liste (11) vorgegeben wird, in welcher vorbestimmten Winkelwerten für den Neigungswinkel (α) vorbestimmte Positionswerte zugeordnet sind, wobei anhand des erfassten Wertes (α1, α2, α3, α4) des Neigungswinkels (α) aus der Liste (11) der zugehörige Positionswert ausgelesen wird und der Positionswert als die Position (P1, P2, P3, P4) der Begrenzung (9) der Erhöhung (7) in der Parklücke (5) bestimmt wird.

8. Verfahren nach Anspruch 6 oder 7,
**dadurch gekennzeichnet, dass**
eine einen Umgebungsbereich des Kraftfahrzeugs (1) beschreibende Umgebungskarte erstellt wird, und die anhand des Wertes (α1, α2, α3, α4) des Neigungswinkels (α) erfasste Position (P1, P2, P3, P4) der Begrenzung (9) der Erhöhung (7) in die Umgebungskarte eingetragen wird.

9. Verfahren nach einem Ansprüche 6 bis 8,
**dadurch gekennzeichnet, dass**
in Abhängigkeit von der Position (P1, P2, P3, P4) der Begrenzung (9) der Erhöhung (7) eine Abrollposition für das zumindest eine Rad (10) vorgegeben wird, wobei das Kraftfahrzeug (1) mit der Normalausparkgeschwindigkeit bis zu der Abrollposition bewegt wird und das Kraftfahrzeug (1) zum Durchführen des Abrollvorgangs an der Abrollposition auf die Abrollgeschwindigkeit abgebremst wird.

10. Parkassistenzsystem (2) zum zumindest semi-autonomen Ausparken eines Kraftfahrzeugs (1) aus einer Parklücke (5), aufweisend eine Sensoreinrichtung (4) zum Messen eines Neigungswinkels (α) des Kraftfahrzeugs (1) in einer Parkstellung des Kraftfahrzeugs (1) innerhalb der Parklücke (5) und eine Steuereinrichtung (3), welche dazu ausgelegt ist, anhand des Neigungswinkels (α) eine Lage (S1, S2) des Kraftfahrzeugs (1) in der Parklücke (5) zu erfassen und, falls anhand des Neigungswinkels (α) als die Lage (S1, S2) eine Schräglage (S2) des Kraftfahrzeugs (1) erfasst ist, in welcher zumindest ein Rad (10) des Kraftfahrzeugs (1) auf einer Erhöhung (7) innerhalb der Parklücke (5) geparkt ist, während des Ausparkens zumindest für einen Abrollvorgang des zumindest einen Rades (10) von der Erhöhung (7) eine im Vergleich zu einer vorbestimmten Normalausparkgeschwindigkeit geringere Abrollgeschwindigkeit für das Kraftfahrzeug (1) vorzugeben.

11. Kraftfahrzeug (1) mit einem Parkassistenzsystem (2) nach Anspruch 10.

## Claims

1. Method for at least semi-autonomously moving a motor vehicle (1) out of a parking space (5), in which before the start of the movement out of the parking space an inclination angle () of the motor vehicle (1) is measured in a parked position of the motor vehicle (1) within the parking space (5) on the basis of sensor data on a vehicle-mounted sensor device (4), and a position (S1, S2) of the motor vehicle (1) in the parking space (5) is detected on the basis of the inclination angle (α), wherein if an oblique position (S2) of the motor vehicle (1), in which at least one wheel (10) of the motor vehicle (1) is parked on a raised area (7) within the parking space (5) is detected as the position (S1, S2) of the motor vehicle (1) in the parked position on the basis of the inclination angle (α), during the movement out of the parking space a rolling speed, which is lower in comparison with a predetermined normal speed of movement out of a parking space, is predefined for the motor vehicle (1) at least for a rolling process in which the at least one wheel (10) rolls off the raised area (7).

2. Method according to Claim 1,
**characterized in that**
the oblique position (S2) of the motor vehicle (1) is detected if the measured inclination angle (α) exceeds a predetermined threshold value.

3. Method according to Claim 1 or 2,
**characterized in that**
the inclination angle (α) of the motor vehicle (1) is detected on the basis of the sensor data of an inertial measuring unit for sensor device (4) of the motor vehicle (1).

4. Method according to one of the preceding claims,
**characterized in that**
the inclination angle (α) of the motor vehicle (1) is detected on the basis of the sensor data of at least one acceleration sensor of the sensor device (4) of the motor vehicle (1), in particular of a gyroscope.

5. Method according to one of the preceding claims,
**characterized in that**
the inclination angle (α) of the motor vehicle (1) is measured on the basis of the compression data of a sensor device (4) of at least one shock absorber of the motor vehicle (1).

6. Method according to one of the preceding claims,
**characterized in that**
a location (P1, P2, P3, P4) of a boundary (9) of the raised area (7) in the parking space (5) is determined on the basis of a value (α1, α2, α3, α4) of the detected inclination angle (α)

7. Method according to Claim 6,
**characterized in that**
a list (11) in which predetermined location values are assigned to predetermined angle values for the inclination angle (α) is predefined, wherein the associated location value is read out from the list (11) on the basis of the detected value (α1, α2, α3, α4) of the inclination angle (α), and the location value is determined as the location (P1, P2, P3, P4) of the boundary (9) of the raised area (7) in the parking space (5) .

8. Method according to Claim 6 or 7,
**characterized in that**
a map of the surroundings which describes a surrounding area of the motor vehicle (1) is produced, and the location (P1, P2, P3, P4) of the boundary (9) of the raised area (7), which is detected on the basis of the value (α1, α2, α3, α4) of the inclination angle (a), is entered in the map of the surroundings.

9. Method according to one of Claims 6 to 8,
**characterized in that**
a rolling position for the at least one wheel (10) is predefined as a function of the location (P1, P2, P3, P4) of the boundary (9) of the raised area (7), wherein the motor vehicle (1) is moved with the normal speed of movement out of a parking space up to the rolling position, and the motor vehicle (1) is braked to the rolling speed in order to carry out the rolling process at the rolling position.

10. Parking assistance system (2) for at least semi-autonomously moving a motor vehicle (1) out of a parking space (5), comprising a sensor device (4) for measuring an inclination angle (α) of the motor vehicle (1) in a parked position of the motor vehicle (1) within the parking space (5), and a control device (3) which is configured to detect a position (S1, S2) of the motor vehicle (1) in the parking space (5) on the basis of the inclination angle (α) if an oblique position (S2) of the motor vehicle (1), in which at least one wheel (10) of the motor vehicle (1) is parked on a raised area (7) within the parking space (5), is detected as the position (S1, S2) on the basis of the inclination angle (a), and to predefine, during the movement out of the parking space, a rolling speed, which is lower in comparison with a predetermined normal speed of movement out of a parking space, for the motor vehicle (1), at least for a process in which the at least one wheel (10) rolls off the raised area (7).

11. Motor vehicle (1) having a parking assistance system (2) according to Claim 10.

## Revendications

1. Procédé de sortie de stationnement au moins semi-autonome d'un véhicule automobile (1) hors d'un emplacement de stationnement (5), avec lequel un angle d'inclinaison (α) du véhicule automobile (1) dans une position de stationnement du véhicule automobile (1) à l'intérieur de l'emplacement de stationnement (5) est mesuré avant le début de la sortie de stationnement à l'aide de données de capteur d'un dispositif capteur (4) côté véhicule et une position (S1, S2) du véhicule automobile (1) dans l'emplacement de stationnement (5) est détectée à l'aide de l'angle d'inclinaison (α), procédé selon lequel, dans le cas où la position (S1, S2) détectée du véhicule automobile (1) dans l'emplacement de stationnement (5) à l'aide de l'angle d'inclinaison (α) est une position oblique (S2) du véhicule automobile (1) dans laquelle au moins une roue (10) du véhicule automobile (1) est stationnée sur une élévation (7) à l'intérieur de l'emplacement de stationnement (5), une vitesse de descente en roulant inférieure à une vitesse de sortie de stationnement normale prédéterminée est prédéfinie pour le véhicule automobile (1) pendant la sortie de stationnement au moins pour une opération de descente en roulant de l'au moins une roue (10) de l'élévation (7) .

2. Procédé selon la revendication 1, **caractérisé en ce que** la position oblique (S2) du véhicule automobile (1) est reconnue lorsque l'angle d'inclinaison (α) mesuré dépasse une valeur de seuil prédéterminée.

3. Procédé selon la revendication 1 ou 2, **caractérisé en ce que** l'angle d'inclinaison (α) du véhicule automobile (1) est détecté à l'aide des données de capteur d'une unité de mesure inertielle du dispositif capteur (4) du véhicule automobile (1).

4. Procédé selon l'une des revendications précédentes, **caractérisé en ce que** l'angle d'inclinaison (α) du véhicule automobile (1) est détecté à l'aide des données de capteur d'au moins un capteur de vitesse de rotation du dispositif capteur (4) du véhicule automobile (1), notamment d'un gyroscope.

5. Procédé selon l'une des revendications précédentes, **caractérisé en ce que** l'angle d'inclinaison (α) du véhicule automobile (1) est mesuré à l'aide des données de compression d'un dispositif capteur (4) d'au moins un amortisseur de chocs du véhicule automobile (1).

6. Procédé selon l'une des revendications précédentes, **caractérisé en ce qu'**une position (P1, P2, P3, P4) d'une délimitation (9) de l'élévation (7) dans l'emplacement de stationnement (5) est déterminée à l'aide d'une valeur (α1, α2, α3, α4) de l'angle d'inclinaison (α) détecté.

7. Procédé selon la revendication 6, **caractérisé en ce qu'**une liste (11) est prédéfinie, dans laquelle des valeurs d'angle prédéterminées pour l'angle d'inclinaison (α) sont affectées à des valeurs de position prédéterminées, la valeur de position associée étant lue dans la liste (11) à l'aide de la valeur (α1, α2, α3, α4) de l'angle d'inclinaison (α) et la valeur de position étant déterminée comme étant la position (P1, P2, P3, P4) de la délimitation (9) de l'élévation (7) dans l'emplacement de stationnement (5).

8. Procédé selon la revendication 6 ou 7, **caractérisé en ce qu'**une carte d'environnement qui décrit une zone environnante du véhicule automobile (1) est créée, et la position (P1, P2, P3, P4) de la délimitation (9) de l'élévation (7) détectée à l'aide de la valeur (α1, α2, α3, α4) de l'angle d'inclinaison (α) est enregistrée dans la carte d'environnement.

9. Procédé selon l'une des revendications 6 à 8, **caractérisé en ce qu'**une position de descente en roulant pour l'au moins une roue (10) est prédéfinie en fonction de la position (P1, P2, P3, P4) de la délimitation (9) de l'élévation (7), le véhicule automobile (1) étant déplacé à la vitesse de sortie de stationnement normale jusqu'à la position de descente en roulant et le véhicule automobile (1) étant freiné à la vitesse de descente en roulant en vue d'accomplir l'opération de descente en roulant à la position de descente en roulant.

10. Système d'assistance au stationnement (2) pour une sortie de stationnement au moins semi-autonome d'un véhicule automobile (1) hors d'un emplacement de stationnement (5), comprenant un dispositif capteur (4) destiné à mesurer un angle d'inclinaison (α) du véhicule automobile (1) dans une position de stationnement du véhicule automobile (1) à l'intérieur de l'emplacement de stationnement (5), et un dispositif de commande (3), lequel est conçu pour détecter une position (S1, S2) du véhicule automobile (1) dans l'emplacement de stationnement (5) à l'aide de l'angle d'inclinaison (α) et, dans le cas où la position (S1, S2) détectée à l'aide de l'angle d'inclinaison (α) est une position oblique (S2) du véhicule automobile (1) dans laquelle au moins une roue (10) du véhicule automobile (1) est stationnée sur une élévation (7) à l'intérieur de l'emplacement de stationnement (5), prédéfinir une vitesse de descente en roulant inférieure à une vitesse de sortie de stationnement normale prédéterminée pour le véhicule automobile (1) pendant la sortie de stationnement au moins pour une opération de descente en roulant de l'au moins une roue (10) de l'élévation (7).

11. Véhicule automobile (1) comprenant un système d'assistance au stationnement (2) selon la revendication 10.
